# EUROPEAN PATENT APPLICATION

(11) **EP 1 956 510 A2**
(43) Date of publication of application: **13.08.2008**
(21) Application number: 07111353.4
(22) Date of filing: 29.06.2007
(51) Int. Cl.: G06F 21/00

(54) **Method for implementing DRM function and additional function using DRM device and system thereof**

(30) Priority: 12.02.2007 KR 20070014542
(71) Applicant: Samsung Electronics Co., Ltd., Suwon-si, Gyeonggi-Do (KR)
(72) Inventor: Kim, Heejean No. 105-704, Geumhwa Maeul Daewoo Hyundai Apt, 446-956, Gyeonggi-do (KR); Sung, Maeng Hee No. 8-306, Shindong-a Apt, 137-070, Seoul (KR); Jin, Weon Il, No. 711-1703, Woobang Apt., 440-330, Gyeonggi-do (KR); Jung, Baeeun, No. 1003-903, Imaechon Samsung Apt., 463-901, Gyeonggi-do (KR); Jung, Tae-Chul, No. 1918, Panteon Regency, 463-957, Gyeonggi-do (KR)
(74) Representative: Grünecker, Kinkeldey, Stockmair & Schwanhäusser Anwaltssozietät

(57) **Abstract**

A digital rights management (DRM) function performing method and system using a DRM device are provided, in which a DRM device connected to a second communication device decodes encoded contents when a first communication device requests to play the contents, the DRM device re-encodes the contents using a session key, and the DRM device transmits the re-encoded contents to the first communication device via the second communication device.

## Description

### BACKGROUND OF THE INVENTION

### Field of the Invention:

The present invention relates to a digital rights management (DRM) function. More particularly, the present invention relates to a DRM function performing method and system that provides convenience of using a DRM device.

### Description of Related Art:

Generally, a DRM function securely protects rights and benefits of a contents service provider, prevents illegal copying, and supports generation, distribution, and management of contents, such as charging for use of the contents and a payment service for the contents. The DRM function may prevent an unauthorized user from using the contents when the user does not pay a fee for the contents by equipping a security authentication system for individual contents.

The DRM function is developed to protect online privacy of commercial products whose uses have been rapidly increased due to wide use of file exchange programs. Online contents are protected by copyright laws. However, regulating illegal web use and offenders is difficult.

Also, contents being protected using the DRM function between communication devices, and right objects capable of accessing the contents are exchangeable. However, it is inconvenient for users to exchange the contents and the right objects. Particularly, when an additional DRM device performing the DRM function is connected to a communication device to be utilized, playing contents in another communication device where a DRM device is not connected is inconvenient since the DRM device is required to be separated in order to connect the additional DRM device.

Therefore, the DRM function is focused on preventing illegal uses of contents on the web, and various types of DRM products based on various access schemes and techniques are provided in the market.

Accordingly, there is a need for an improved method and system that provides a DRM function that improves users' convenience.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a DRM function and an additional function performing method and system that improves users' convenience with a second communication device performing a DRM function and an additional function, using a DRM device connected to a first communication device.

According to an aspect of exemplary embodiments of the present invention, there is provided a DRM function performing method using a DRM device, in which a DRM device connected to a second communication device decodes encoded contents when a first communication device requests to play the contents, the DRM device re-encodes the contents using a session key, and the DRM device transmits the re-encoded contents to the first communication device via the second communication device.

According to an aspect of exemplary embodiments of the present invention, there is provided a DRM function performing method of a DRM device, in which encoded contents are decoded when a first communication device requests to play the contents, the contents are re-encoded using a session key, and the re-encoded contents are transmitted to the first communication device via the second communication device.

According to an aspect of exemplary embodiments of the present invention, there is provided a DRM function controlling method of a DRM device from a second communication device, in which a request to play contents is received from a first communication device, and the DRM device is requested to decode the contents being requested to be played, wherein the DRM device decodes the contents, re-encodes the decoded contents using a session key, and transmits the re-encoded contents to the first communication device via a second communication device.

According to an aspect of exemplary embodiments of the present invention, there is provided an additional function performing method using a DRM device, in which a first communication device requests a DRM device to perform an additional function, the DRM device being connected to a second communication device, the DRM device requests authentication information with respect to the additional function to the first communication device, the first communication device encodes the authentication information using a predetermined session key, and the first communication device transmits the encoded authentication information to the DRM device via the second communication device.

According to an aspect of exemplary embodiments of the present invention, there is provided a DRM function performing system using a DRM device, in which a first communication device requests to play contents, a DRM device decodes encoded contents being requested, re-encodes the contents using a session key, and transmits the re-encoded contents to the first communication device, and a second communication device being connected to the DRM device transmits data between the DRM device and the first communication device.

According to an aspect of exemplary embodiments of the present invention, a DRM device is provided, in which a DRM module decodes encoded contents when the first communication device requests to play the contents, and re-encodes the decoded contents using a session key, and an interface transmits the re-encoded contents to a first communication device via a second communication device.

According to an aspect of exemplary embodiments of the present invention, there is provided a second communication device controlling a DRM function of a DRM device, in which the second communication device includes a first interface for receiving a request to play contents from a first communication device, a control unit for transmitting the content, and a second interface for requesting the DRM device to decode the transmitted contents, wherein the DRM device decodes the contents, re-encodes the decoded contents using a session key, and transmits the re-encoded contents to the first communication device via a second communication device.

According to an aspect of exemplary embodiments of the present invention, there is provided an additional function performing system using a DRM device, in which a first communication device requests an additional function, a DRM device encodes authentication information about the additional function using a session key, and transmits the encoded authentication information to the first communication device, and a second communication device being connected to the first communication device transmits data between the first communication device and the DRM device.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following detailed description, taken in conjunction with the accompanying drawings in which:

FIG. 1 is a first configuration diagram illustrating a DRM function performing system according to an exemplary embodiment of the present invention;

FIG. 2 is a flowchart illustrating a DRM function performing method according to an exemplary embodiment of the present invention;

FIG. 3 is a second configuration diagram illustrating a DRM function performing system according to an exemplary embodiment of the present invention;

FIG. 4 is a third configuration diagram illustrating a DRM function performing system according to an exemplary embodiment of the present invention;

FIG. 5 is a fourth configuration diagram illustrating a DRM function performing system according to an exemplary embodiment of the present invention;

FIG. 6 is a configuration diagram illustrating a communication device according to an exemplary embodiment of the present invention; and

FIG. 7 is a flowchart illustrating an additional function performing method according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

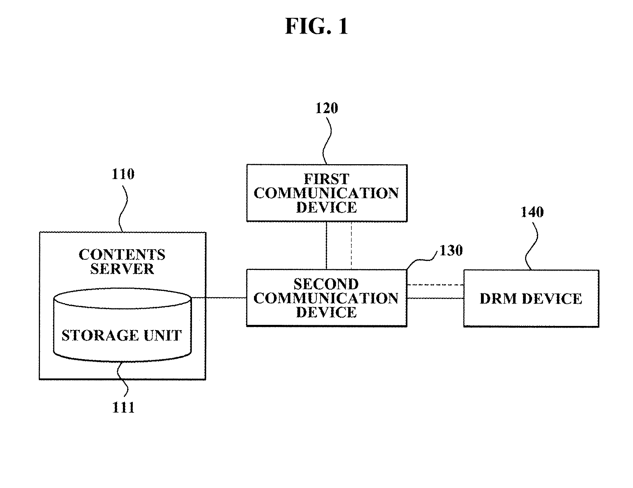

FIG. 1 is a first configuration diagram illustrating a DRM function performing system according to an exemplary embodiment of the present invention.

As illustrated in FIG. 1, the DRM function performing system according to an exemplary embodiment of the present invention may include a contents server 110 which includes a storage unit 111 storing contents, a first communication device 120, a second communication device 130, and a DRM device 140.

The first communication device 120 may request the DRM device 140 being connected to the second communication device 130 to decode contents selected by a user since an additional DRM device for performing a DRM function with respect to contents is not directly connected to the first communication device.

The DRM device 140 may decode encoded contents when the first communication device 120 requests the contents, re-encode the decoded contents using a predetermined session key, and securely transmit the re-encoded contents to the first communication device 120.

In an exemplary implementation, the DRM device 140 may be embedded in a communication device, and also may be embodied as an additional device capable of performing the DRM function and an additional function. For example, the DRM device 140 may be detachably connected to the communication device via a universal serial bus (USB) port, and also may be connected to various electronic devices to be utilized.

As an example, the DRM device 140 may be embodied as a smart card type such as a Subscriber Identity Module (SIM) card, a Removable User Identity Module (R-UIM) card, a Universal Subscriber Identity Module (USIM) card, and the like.

The second communication device 130 may be connected to the DRM device 140 to perform as a relay which transmits data between the DRM device 140 and the first communication device 120.

In an exemplary implementation, the communication device includes the first communication 120 and the second communication device 130, and may include all electronic devices which configure a home network and a mobile terminal.

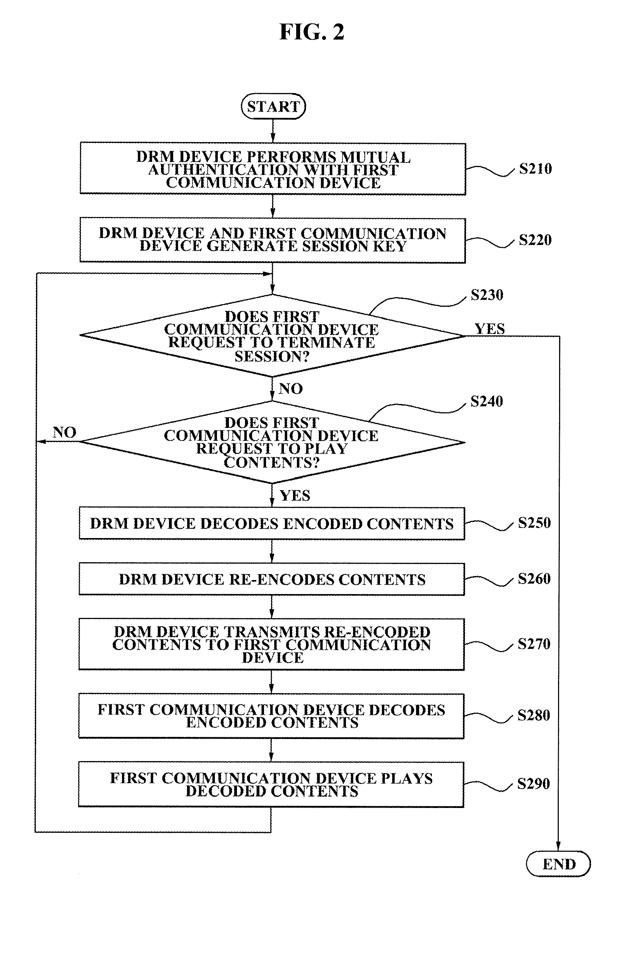

FIG. 2 is a flowchart illustrating a DRM function performing method according to an exemplary embodiment of the present invention.

As illustrated in FIG. 2, the DRM function performing method according to an exemplary embodiment of the present invention may include step S210 of performing mutual authentication with a first communication device 120 by a DRM device 140 of FIG. 1, step S220 of generating a session key from the DRM device 140 and the first communication device 120 of FIG. 1, step S230 of determining whether the first communication device 120 requests to terminate a session, step S240 of determining whether the first communication device 120 requests to play contents, step S250 of decoding encoded contents by the DRM device 140, step S260 of re-encoding the contents by the DRM device 140, step S270 transmitting the re-encoded contents to the first communication device 120 by the DRM device 140, step S280 of decoding the contents by the first communication device 120, and step S290 of playing the decoded contents by the first communication device 120.

Hereinafter, the DRM function performing method according to an exemplary embodiment of the present invention will be described in detail.

In step S210, the DRM device 140 may perform mutual authentication with the first communication device 120 for secure communication when the first communication device 120 requests to establish a session via the second communication device 130.

In an exemplary implementation, the first communication device 120 may request the DRM device 140 to establish a session, and also the DRM device 140 may request the first communication device 120 to establish a session.

Mutual authentication may be performed between a DRM device and a first communication device. Also any one of the DRM device and the first communication device may perform the mutual authentication.

In an exemplary implementation, the DRM device 140 and the first communication device 120 may use a public key encryption scheme or a broadcast encryption scheme based on a public key infrastructure (PKI) for the mutual authentication.

As an example, the DRM device 140 may generate a first random number C1, and transmit the generated first random number C1 to the first communication device 120. When the first communication device 120 receives the generated first random number C1, the first communication device 120 may encode the received first random number C1 using a master key MK, and transmit the encoded data MK(C1) to the DRM device 140.

When the DRM device 140 receives the encoded data MK(C1), the DRM device 140 may decode the encoded data MK(C1) using the master key MK, and perform authentication with respect to the first communication device 120 based on the decoded data C1.

When the DRM device 140 performs authentication with respect to the first communication device 120, the first communication device 120 may generate a second random number C2, and the first communication device 120 may transmit the generated second random number C2 to the DRM device 140. When the DRM device 140 receives the generated second random number C2, the DRM device 140 may encode the received second random number C2 using the master key MK, and transmit the encoded data MK(C2) to the first communication device 120.

When the first communication device 120 receives the encoded data MK(C2), the first communication device 120 may decode the encoded data MK(C2) using the master key MK, and perform authentication with respect to the DRM device 140 based on the decoded data MK(C2).

In step S220, when the mutual authentication with the first communication device 120 is successfully performed, the DRM device 140 and the first communication device 120 may generate a predetermined session key.

As an example, when the encoded data MK(C1) and MK(C2) correspond to R1 and R2, the DRM device 140 may generate MK(R1 R2) using a session key SK being predetermined based on R1 and R2.

In an exemplary implementation, the generated session key may be used until a session is terminated between the first communication device 120 and the DRM device 140, which indicates that the first communication device 120 and the DRM device 140 may use an identical session key to generate at least one single content until the session is terminated.

In step S230, the DRM device 140 may determine whether the first communication 120 requests to terminate the session.

When the first communication device 120 does not request to terminate the session, the DRM device 140 may determine whether the first communication device 120 requests to play contents being selected by a user, from contents stored in the storage unit 111 of FIG. 1, in step S240.

When the first communication device 120 requests to play the contents, the DRM device 140 may decode encoded contents, the encoded contents being requested from the first communication device 120, in step S250. That is, the DRM device 140 may receive the encoded contents being requested from the contents server 110 of FIG. 1 via the second communication device 130.

Also, the DRM device 140 may determine whether the first communication device 120 requests to terminate the session after determining the request from the first communication device 120. When the first communication device does not request to terminate the session, the DRM device 140 may decode encoded contents being requested. The present invention is not limited to the above description, and when a single session is established, various schemes capable of determining whether a session key corresponding to the established session is being continuously used may be applied.

The DRM device 140 may re-encode the contents using the predetermined session key in step S260, and may transmit the re-encoded contents to the first communication device 120 via the second communication device 130 in step S270.

Consequently, after the first communication device 120 receives the re-encoded contents, the first communication device 120 may decode the re-encoded contents using the predetermined session key in step S280, and may play the decoded contents in step S290.

As an example, the first communication device 120 may output an audio such as an MP3 file via an audio output unit, and output a text such as a document file, or a video, via a display unit.

Also, after the decoding of the contents, the DRM device 140 may transmit the decoded contents to the first communication device 120, decode the contents in units of packets, transmit the decoded contents in real-time to the first communication device 120. Thus, a real-time service can be provided.

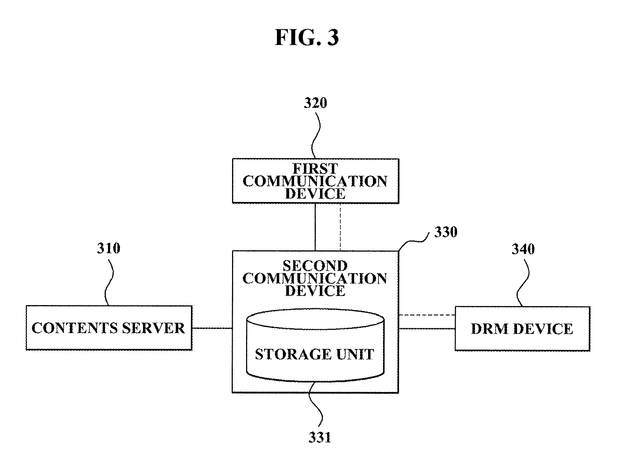

FIG. 3 is a second configuration diagram illustrating a DRM function performing system according to an exemplary embodiment of the present invention.

As illustrated in FIG. 3, the DRM function performing system according to an exemplary embodiment of the present invention may include a contents server 310 and a second communication device 330 having a storage unit 331 which stores contents, the contents being protected by a DRM function.

When a first communication device 320 requests to play the contents, a DRM device 340 may search for contents being requested from the first communication device 320, from predetermined stored contents, and receive the retrieved contents.

When the DRM device 340 receives the encoded contents, the DRM device 340 may decode the encoded contents.

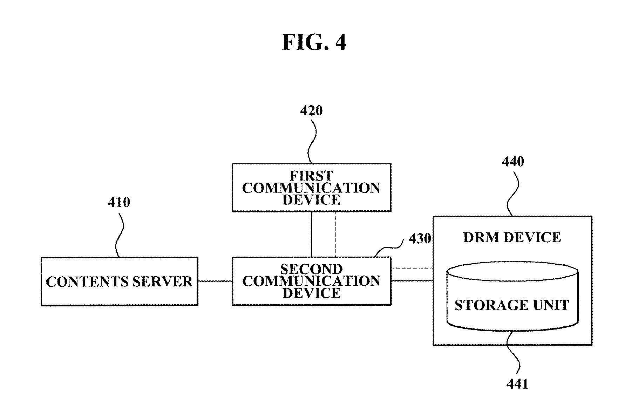

FIG. 4 is a third configuration diagram illustrating a DRM function performing system according to an exemplary embodiment of the present invention.

As illustrated in FIG. 4, the DRM function performing system according to an exemplary embodiment of the present invention may include a contents server 410, a second communication device 430 and a DRM device 440 having a storage unit 441 which stores contents, the contents being protected by a DRM function.

When a first communication device 420 requests to decode the contents, the DRM device 440 may search for contents being requested from the first communication device 420, from contents stored in the DRM device 420, and decode the retrieved contents.

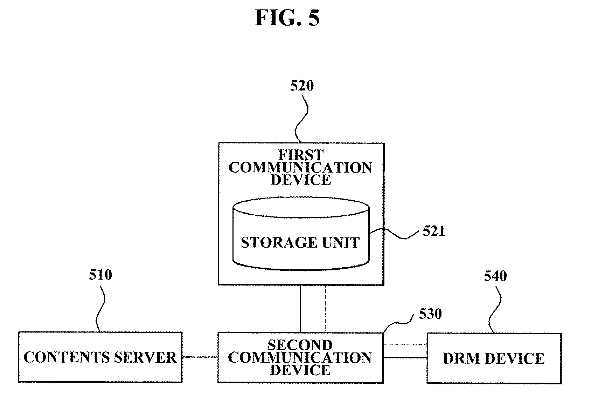

FIG. 5 is a fourth configuration diagram illustrating a DRM function performing system according to an exemplary embodiment of the present invention.

As illustrated in FIG. 5, the DRM function performing system according to an exemplary embodiment of the present invention may include a contents server 510, a second communication device 530 and a first communication device 520 having a storage unit 521 which stores contents, the contents being protected by a DRM function.

When the first communication device 520 requests to decode the contents, a DRM device 540 may receive encoded contents being requested from the first communication device 520.

When the DRM device 540 receives the encoded contents, the DRM device 540 may decode the encoded contents.

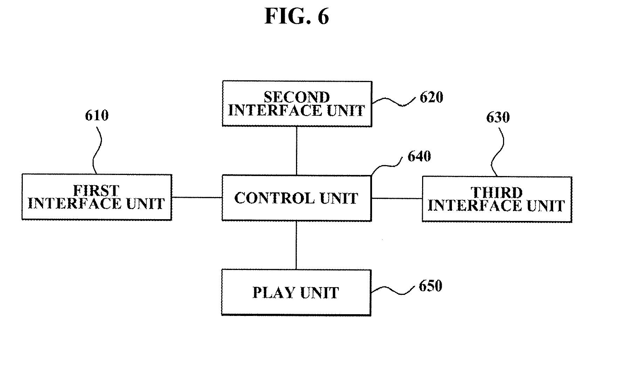

FIG. 6 is a configuration diagram illustrating a communication device according to an exemplary embodiment of the present invention.

As illustrated in FIG. 6, the communication device according to an exemplary embodiment of the present invention may include a first interface unit 610, a second interface unit 620, a third interface unit 630, a control unit 640, and a play unit 650.

In an exemplary implementation, the communication device according to an exemplary embodiment of the present invention may include the first communication device and the second communication device described in FIGS. 1 through 5.

The first interface unit 610 may communicate with a contents server, and the second interface unit 620 may communicate with another communication device. The third interface unit 630 may be connected to a DRM device.

In an exemplary implementation, the first interface unit 610 may indicate any one interface of various types of interfaces capable of connecting to the contents server via a wired network or a wireless network.

The control unit 640 may control all devices in the communication device according to an exemplary embodiment of the present invention. The play unit 650 may play contents being protected by a DRM function, and include an audio output unit or a display unit.

The DRM device may include function blocks configuring a communication device and a DRM module decoding encoded contents corresponding to requested contents when the communication device requests to play the contents, and re-encoding the contents using a predetermined session key.

As described above, a DRM device may perform a DRM function, and also may perform an additional function since a secure communication channel is guaranteed via authentication with a communication device. The additional function being used for devices such as a fingerprint recognition digital door lock.

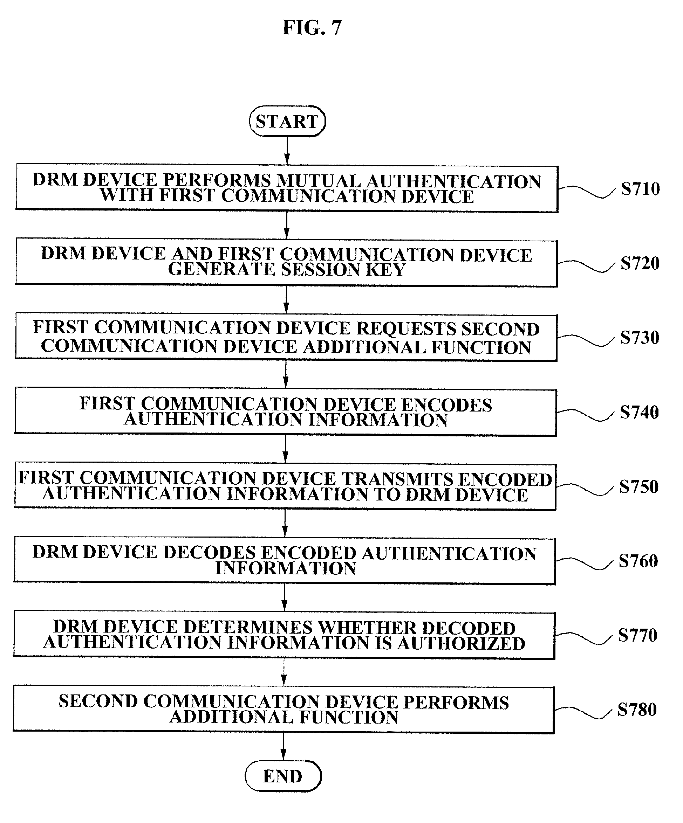

FIG. 7 is a flowchart illustrating an additional function performing method according to an exemplary embodiment of the present invention.

As illustrated in FIG. 7, the additional function performing method according to an exemplary embodiment of the present invention may include step S710 of performing mutual authentication with a first communication device 120 of FIG. 1, step S720 of generating a session key by a DRM device 140 of FIG. 1 and the first communication device 120, step S730 of requesting a second communication device 130 of FIG. 1 for an additional function from the first communication device 120, step S740 of encoding authentication information by the first communication device 120, step S750 of transmitting the encoded authentication information from the first communication device 120 to the DRM device 140, step S760 d of encoding the encoded authentication information by the DRM device 140, step S770 of determining whether the decoded authentication information is authorized, and step S780 of performing the additional function by the second communication device 130.

Hereinafter, the additional function performing method according to the other embodiment of the present invention will be described in detail.

In step S710, the DRM device 140 may perform the mutual authentication with the first communication device 120 when the first communication device 120 requests to establish a session via the second communication device 130.

As an example, the DRM device 140 may generate a first random number C1, and transmit the generated first random number C1 to the first communication device 120. When the first communication device 120 receives the generated first random number C1, the first communication device 120 may encode the received first random number C1 using a master key MK, and transmit the encoded data MK(C1) to the DRM device 140.

When the DRM device 140 receives the encoded data MK(C1), the DRM device 140 may decode the encoded data MK(C1) using the master key MK, and perform authentication with respect to the first communication device 120 based on the decoded data C1.

When the DRM device 140 performs authentication with respect to the first communication device 120, the first communication device 120 may generate a second random number C2, and the first communication device 120 may transmit the generated second random number C2 to the DRM device 140. When the DRM device 140 receives the generated second random number C2, the DRM device 140 may encode the received second random number C2 using the master key MK, and transmit the encoded data MK(C2) to the first communication device 120.

When the first communication device 120 receives the encoded data MK(C2), the first communication device MK(C2) may decode the encoded data MK(C2) using the master key MK, and perform authentication with respect to the DRM device 140 based on the decoded data MK(C2).

In step S720, the DRM device 140 and the first communication device 120 may generate a predetermined session key when the first communication device 120 successfully performs the mutual authentication with the DRM device 140.

As an example, when the encoded data MK(C1) and MK(C2) correspond to R1 and R2, the DRM device 140 may generate MK(R1 R2) using the session key SK being predetermined based on R1 and R2.

In step S730, the first communication device 120 may request the second communication device 130 for the additional function selected by a user.

The first communication device 120 may encode the authentication information using the session key being generated by an inputted fingerprint in step S740, and may transmit the encoded authentication information to the DRM device 140 via the second communication device 130 in step S750.

The DRM device 140 may decode the encoded authentication information using the generated session key in step S760 after receiving the encoded authentication information, and determines whether the decoded authentication information is authorized in step S770.

In an exemplary implementation, the DRM device 140 needs authentication information which can be a reference to determine whether the authentication information is authorized. Also, a storage unit may be included in a contents server, a first communication device, a second communication server, or a DRM device.

In step S780, the second communication device 130 may perform the additional function when the authentication information is authorized. As an example, the second communication device 130 may open a digital door lock.

The digital rights management (DRM) function performing method according to the above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, and the like including a carrier wave transmitting signals specifying the program instructions, data structures, and the like. Examples of program instructions include both machine code, such as produced by a compiler, and files containing higher level code that may be executed by the computer using an interpreter. The described hardware devices may be configured to act as one or more software modules in order to perform the steps of the above-described exemplary embodiments of the present invention.

According to exemplary embodiments of the present invention, it is possible to improve users' convenience with a second communication device performing an additional function and a DRM function, using a DRM device being connected to a first communication device.

While the invention has shown and described with reference to certain exemplary embodiments thereof, it will be understood by those skilled in the art that various changes in form and details may be made therein without departing from the spirit and scope of the present invention as defined by the appended claims and their equivalents.

## Claims

1. A digital rights management (DRM) function performing method using a DRM device connected to a second communication device, the method comprising:
decoding encoded contents when a first communication device requests to play the contents;
re-encoding by the DRM device the contents using a session key; and
transmitting the re-encoded contents from the DRM device to the first communication device via the second communication device.

2. The DRM function performing method of claim 1, further comprising:
performing mutual authentication between the DRM device and the first communication device when a session is requested prior to the decoding of the encoded contents;
generating the session key when the DRM device performs the mutual authentication with the first communication device;
determining whether the first communication device requests to terminate the session; and
determining whether the first communication device requests to play the contents when the first communication device does not request to terminate the session.

3. The DRM function performing method of claim 2, wherein the performing of the mutual authentication comprises performing the mutual authentication by at least one of the DRM device and the first communication device.

4. The DRM function performing method of claim 2, wherein the generating of the session key comprises generating the session key based on data, which is used for the mutual authentication, by the DRM device and the first communication device when the DRM device performs the mutual authentication with the first communication device.

5. The DRM function performing method of claim 1, further comprising:
decoding the re-encoded contents using the generated session key when the first communication device receives the re-encoded contents; and
playing the decoded contents when the first communication device decodes the re-encoded contents.

6. The DRM function performing method of claim 1, wherein the decoding of the encoded contents when the first communication device requests to play the contents comprises:
receiving the encoded contents in the second communication device when the first communication device requests to play the contents;
transmitting the encoded contents from the second communication device to the DRM device; and
decoding the encoded contents when the DRM device receives the encoded contents.

7. The DRM function performing method of claim 1, wherein the decoding of the encoded contents when the first communication device requests to play the contents comprises:
searching for the encoded contents from stored contents when the first communication device requests to play the contents;
transmitting the encoded contents from the second communication device to the DRM device; and
decoding the encoded contents when the DRM device receives the encoded contents.

8. The DRM function performing method of claim 1, wherein the decoding of the encoded contents when the first communication device requests to play the contents comprises:
informing the DRM device regarding the contents when first communication device requests to play the contents;
searching for the encoded contents from the stored contents; and
decoding the encoded contents when the DRM device searches for the encoded contents.

9. The DRM function performing method of claim 1, wherein the decoding of the encoded contents when the first communication device requests to play the contents comprises:
receiving encoded contents from the first communication device when the first communication device requests to play the contents;
transmitting the encoded contents from the first communication device to the DRM device; and
decoding the encoded contents when the DRM device receives the encoded contents.

10. The DRM function performing method of claim 1, wherein the decoding of the encoded contents when the first communication device requests to play the contents decodes the encoded contents in a packet unit of a reference size.

11. A digital rights management (DRM) function performing method of a DRM device, the method comprising:
decoding encoded contents when a first communication device requests to play the contents;
re-encoding the contents using a session key; and
transmitting the re-encoded contents to the first communication device via the second communication device.

12. The DRM function performing method of claim 11, further comprising:
performing mutual authentication with the first communication device when a session is requested prior to the decoding of the encoded contents;
generating the session key when the mutual authentication with the first communication device is performed;
determining whether the first communication device requests to terminate the session; and
determining whether the first communication device requests to play the contents when the first communication device does not request to terminate the session.

13. The DRM function performing method of claim 12, wherein the generating of the session key comprises:
generating the session key based on data, which is used for the mutual authentication, when the mutual authentication with the first communication device is performed.

14. A digital rights management (DRM) function controlling method of a DRM device from a second communication device, comprising:
receiving a request to play contents from a first communication device; and
requesting the DRM device to decode the contents being requested to be played,
wherein the DRM device decodes the contents, re-encodes the decoded contents using a session key, and transmits the re-encoded contents to the first communication device via a second communication device.

15. The DRM function controlling method of claim 14, wherein the requesting of the DRM device to decode the contents comprises:
receiving the encoded contents when the first communication device requests to play the contents, the encoded contents being requested from a contents server; and
requesting the DRM device to decode the received encoded contents.

16. The DRM function controlling method of claim 14, wherein the requesting of the DRM device to decode the contents comprises:
searching for the encoded contents being requested from stored contents when the first communication device requests to play the contents; and
requesting the DRM device to decode the retrieved encoded contents.

17. The DRM function controlling method of claim 14, wherein the requesting of the DRM device to decode the contents comprises:
requesting the DRM device to decode the contents when the first communication device requests to play the contents, and the DRM device searches for the encoded contents from the stored contents, and decodes the retrieved encoded contents.

18. The DRM function controlling method of claim 14, comprising:
receiving the encoded content when the first communication device requests to play the contents; and
requesting the DRM device to decode the received encoded contents.

19. An additional function performing method using a DRM device, comprising:
requesting from a first communication device a DRM device to perform an additional function, the DRM device being connected to a second communication device;
requesting from the DRM device authentication information with respect to the additional function, to the first communication device;
encoding by the first communication device the authentication information using a session key; and
transmitting the encoded authentication information from the first communication device to the DRM device via the second communication device.

20. The additional function performing method of claim 19, further comprising:
requesting from the first communication device the DRM device to establish a session via the second communication device prior to the requesting of the additional function;
performing by the DRM device mutual authentication with the first communication device; and
generating the session key when the DRM device performs the mutual authentication with the first communication device.

21. The additional function performing method of claim 20, wherein the generating of the session key comprises:
generating from the first communication device the session key based on data, which is used for the mutual authentication with the DRM device, when the first communication device performs the mutual authentication with the DRM device.

22. The additional function performing method of claim 19, further comprising:
decoding the encoded authentication information, and determining whether the decoded authentication information is authorized when the DRM device receives the encoded authentication information; and
performing by the second communication device the additional function when the decoded authentication information is authorized.

23. A computer-readable storage medium storing a program for implementing a DRM function performing method in a DRM device connected to a second communication device, the method comprising:
decoding encoded contents when a first communication device requests to play the contents;
re-encoding the contents by the DRM device using a session key; and
transmitting the re-encoded contents from the DRM device to the first communication device via the second communication device.

24. A digital rights management (DRM) function performing system using a DRM device, comprising:
a first communication device for requesting to play contents;
a DRM device for decoding encoded contents being requested, re-encoding the contents using a session key, and transmitting the re-encoded contents to the first communication device; and
a second communication device being connected to the DRM device for transmitting data between the DRM device and the first communication device.

25. The system of claim 24, wherein the DRM device performs mutual authentication with the first communication device when a session is requested, generates the session key when the mutual authentication with the first communication device is performed, and determines whether the first communication device requests to play the contents when the first communication device does not request to terminate the session.

26. The system of claim 25, wherein at least one of the DRM device and the first communication device perform the authentication.

27. The system of claim 26, wherein the DRM device generates the session key based on the data, which is used for the mutual authentication, when the mutual authentication with the first communication device is performed.

28. The system of claim 25, wherein the DRM device receives the encoded contents from the contents server via the second communication device when the first communication device requests to play the contents and decodes the received encoded contents .

29. The system of claim 25, wherein the DRM device receives the encoded contents among contents stored in the second communication device, and decodes the received encoded contents when the first communication device requests to play the contents.

30. The system of claim 26, wherein a DRM device searches for the encoded contents from the stored contents, and decodes the retrieved encoded contents when the first communication device requests to play the contents.

31. The system of claim 25, wherein the DRM device receives the encoded contents from the first communication device, and decodes the received encoded contents when the first communication device requests to play the contents, the encoded contents being requested via the second communication device.

32. The system of claim 25, wherein the DRM device decodes the encoded contents in a packet unit of a reference size.

33. The system of claim 25, wherein the first communication device decodes the re-encoded contents using the session key, and plays the decoded re-encoded contents.

34. A digital rights management DRM device comprising:
a DRM module for decoding encoded contents when the first communication device requests to play the contents, and re-encodes the decoded contents using a session key; and
an interface for transmitting the re-encoded contents to a first communication device via a second communication device.

35. The DRM device of claim 34, wherein the DRM device performs mutual authentication with the first communication device when a session is requested, generates the session key when the mutual authentication with the first communication device is performed, determines whether the first communication device requests to terminate the session, and determines whether the first communication device requests to play the contents when the session is not requested to be terminated.

36. The DRM device of claim 35, wherein the DRM device generates the session key based on data, which is used for the mutual authentication, when the mutual authentication with the first communication device is performed.

37. A second communication device controlling a digital rights management (DRM) function of a DRM device, comprising:
a first interface for receiving a request to play contents from a first communication device;
a control unit for transmitting the content; and
a second interface for requesting the DRM device to decode the transmitted contents,
wherein the DRM device decodes the contents, re-encodes the decoded contents using a session key, and transmits the re-encoded contents to the first communication device via a second communication device.

38. The second communication device of claim 37, further comprising a third interface for receiving the encoded contents when the first communication device requests to play the contents, the encoded contents being requested from a contents server, wherein the second interface requests the DRM device to decode the received encoded contents.

39. The second communication device of claim 37, wherein the control unit searches for the encoded contents being requested from stored contents when the first communication device requests to play the contents, and the second interface requests the DRM device to decode the retrieved encoded contents.

40. The second communication device of claim 37, wherein the second interface requests the DRM device to decode the contents when the first communication device requests to play the contents, and the DRM device searches for the encoded contents from the stored contents, and decodes the retrieved encoded contents.

41. The second communication device of claim 37, wherein the first interface receives the encoded content when the first communication device requests to play the contents, and requests the DRM device to decode the received encoded contents.

42. An additional function performing system using a digital rights management (DRM) device comprising:
a first communication device for requesting an additional function;
a DRM device for encoding authentication information regarding the additional function using a session key, and transmitting the encoded authentication information to the first communication device; and
a second communication device being connected to the first communication device for transmitting data between the first communication device and the DRM device.

43. The system of claim 42, wherein the DRM device performs the mutual authentication with the first communication device when the first communication device requests to establish a session via the second communication device, and generates the session key when the mutual authentication with the first communication device is performed.

44. The system of claim 43, wherein the DRM device generates the session key based on the data, which is used for the mutual authentication, when the mutual authentication with the first communication device is performed.

45. The system of claim 42, wherein the DRM device decodes the encoded authentication information, determines whether the decoded authentication information is authorized, and performs the additional function when the decoded authentication information is authorized.
